# EUROPEAN PATENT SPECIFICATION

(11) **EP 2 759 617 B1**
(45) Date of publication and mention of the grant of the patent: **11.05.2016**
(21) Application number: 12833146.9
(22) Date of filing: 20.09.2012
(51) Int. Cl.: C23C 2/06, B32B 15/01, C22C 38/00, C22C 38/06, C22C 38/38, C23C 2/28, C22C 38/02, C22C 38/04, C22C 38/12, C22C 38/14, C22C 38/18

(54) **ALLOYED HOT-DIP GALVANIZED STEEL SHEET WITH EXCELLENT CORROSION RESISTANCE AFTER COATING**
LEGIERTES FEUERVERZINKTES STAHLBLECH MIT HERVORRAGENDER KORROSIONSBESTÄNDIGKEIT NACH DEM BESCHICHTEN
TÔLE D'ACIER ALLIÉ GALVANISÉE PAR IMMERSION À CHAUD PRÉSENTANT UNE EXCELLENTE RÉSISTANCE À LA CORROSION APRÈS REVÊTEMENT

(30) Priority: 20.09.2011 JP 2011204415
(43) Date of publication of application: 30.07.2014
(73) Proprietor: JFE Steel Corporation, Tokyo, 100-0011 (JP)
(72) Inventor: MIYATA, Mai, Tokyo 100-0011 (JP); SUZUKI, Yoshitsugu, Tokyo 100-0011 (JP)
(74) Representative: Grünecker Patent- und Rechtsanwälte PartG mbB
(86) International application number: PCT/JP2012/005959
(87) International publication number: WO 2013/042356

(56) References cited:
- EP-A1- 1 160 346
- EP-A1- 1 354 970
- EP-A1- 1 696 048
- JP-A- H 032 391
- JP-A- H02 225 652
- JP-A- 2010 255 113
- JP-A- 2011 117 041

## Description

The present invention relates to a galvannealed steel sheet having high corrosion resistance after painting based on a high-strength steel sheet containing Si and a method for manufacturing the galvannealed steel sheet.

### Background Art

In recent years, surface-treated steel sheets manufactured by using rustproofing steel sheets as materials, particularly galvannealed steel sheets, which are excellent in rustproofness, have been used in the fields of automobiles, household electrical appliances, and construction materials. In particular, the number of rustproof high-strength galvannealed steel sheets used in the automotive field is increasing because, from the standpoint of improving the mileage and crash safety of automobiles, the trend of increasing the strength and reducing the thickness of automobile body materials and thereby reducing the weight and increasing the strength of automotive bodies encourages the application of high-strength steel sheets to automobiles.

In the application of high-strength galvannealed steel sheets to the automotive field, corrosion resistance after painting is as important as the rustproof properties. Since automotive steel sheets are painted and then used, they are generally subjected to a chemical conversion treatment called phosphating before painting. However, steel sheets having poor chemical conversion treatability have, an uncovered region, in which no crystals grow during chemical conversion, and have painting defects in the uncovered region. This results in low corrosion resistance after painting.

It is known that this problem tends to occur particularly in Si-rich steel sheets. To produce galvannealed steel sheets, steel sheets are generally subjected to hot-dip coating and are heat-treated in the air to cause iron of the steel sheets, i.e. the substrate steel sheets, to diffuse into a galvanized layer, thereby forming an alloy. Because of their low alloying reaction rate, Si-rich steel sheets require high alloying temperatures. This results in the formation of a Zn oxide layer having an increased thickness on the surface of coating during the alloying reaction. The Zn oxide layer repels a chemical conversion treatment liquid and adversely affects chemical conversion treatability. This results in low corrosion resistance after painting.

As an example of the related art that aims to improve the chemical conversion treatability of galvannealed steel sheets, Patent Literature 1 discloses a galvannealed steel sheet that has a flat portion in which an oxide layer having a thickness of 10 nm or more is formed on the coated layer surface, wherein the Zn/Al ratio (at%) of the flat portion surface layer ranges from 2.0 to 8.0. In the technique described in Patent Literature 1, a thin portion of the oxide film serves as the starting point of the formation of crystals growing during chemical conversion and thereby improves chemical conversion treatability. Thus, when the oxide film entirely has a large thickness as in Si-rich steel sheets, this technique has a low improvement effect. Another example of galvannealed steel sheet is disclosed by Patent Literature 2 (EP1160346).

### Citation List

### Patent Literature

PTL 1: Japanese Patent No. 3644402
PTL 2: EP1160346

### Summary of Invention

### Technical Problem

The present invention has been made in view of such situations, and it is an object of the present invention to provide a galvannealed steel sheet having high corrosion resistance after painting based on a high-strength steel sheet containing Si and a method for manufacturing the galvannealed steel sheet.

### Solution to Problem

In galvannealed steel sheets based on Si-rich steel sheets, a Zn oxide layer formed on the coated layer surface adversely affects chemical conversion treatability and tends to lower corrosion resistance after painting.

The present inventors studied the relationship between the state of Zn oxide on the surface of coating before a chemical conversion treatment and corrosion resistance after painting. As a result, the present inventors found that corrosion resistance after painting tends to deteriorate with increasing amount of Zn oxide. However, corrosion resistance after painting varied in some cases, even if there were substantially the same amounts of Zn oxide. A detailed examination of the surface state showed that a sample having high corrosion resistance after painting had a low fraction of surface coverage with Zn oxide. In other words, corrosion resistance after painting tends to be improved with increasing percentage of exposed Zn metal of the galvannealed layer surface. The term "Zn metal", as used herein, refers to Zn detected as a metal by XPS after a natural oxidation film of Zn is removed.

First, a galvannealed layer surface was sputtered to remove a Zn oxide having a thickness in the range of 5 to 15 nm. The relationship between the percentage of exposed Zn metal and corrosion resistance after painting was studied on the basis of the percentage of exposed Zn metal as measured by XPS. As a result, it was found that corrosion resistance after painting was satisfactory when the percentage of exposed Zn metal was 20% or more.

Furthermore, the percentage of exposed Zn metal was measured in galvannealed steel sheets based on steel sheets having different Si contents. As a result, it was considered that the percentage of exposed Zn metal tends to decrease with increasing Si content of the steel sheets. This is probably because an increase in Si content resulted in an increased alloying temperature and the formation of a thick Zn oxide layer. Thus, in Si-rich steel sheets, in order to increase the percentage of exposed Zn metal and improve corrosion resistance after painting, it is necessary to suppress the growth of a Zn oxide layer. The present inventors studied various methods for suppressing the growth of a Zn oxide layer and found it effective to blow an inert gas over the surface of a steel sheet during an alloying heat treatment. When no Zn oxide layer is formed during the alloying heat treatment, Zn may evaporate because of its low vapor pressure. Thus, the formation of a certain amount of Zn oxide layer is indispensable. Also in this regard, it is effective to blow an inert gas over the surface of a steel sheet during the alloying heat treatment.

The present invention was achieved on the basis of these findings and is summarized as follows.

A galvannealed steel sheet according to claim 1 having high corrosion resistance after painting consisting of, on a mass percent basis, C: 0.05% to 0.30%, Si: 1.0% to 3.0%, Mn: 0.5% to 3.0%, Al: 0.01% to 3.00%, S: 0.001% to 0.010%, and P: 0.001% to 0.100% as chemical components, the remainder being Fe and incidental impurities, wherein the steel sheet includes a galvannealed layer on the surface thereof, the galvannealed layer consisting of Fe: 7% to 15% and Al: 0.02% to 0.30% and a remainder being Zn and incidental impurities, the percentage of exposed Zn metal of the galvannealed layer surface being 20% or more.

The aformentioned galvannealed steel sheet according to claim 1 having high corrosion resistance after painting optionally further consists of at least one element selected from Cr: 0.1% to 1.0%, Mo: 0.1% to 1.0%, Ti: 0.01% to 0.10%, Nb: 0.01% to 0.10%, and B: 0.0005% to 0.0050% on a mass percent basis.

In the present specification, the percentages with respect to steel components are based on mass percentage. Advantageous Effects of Invention

The present invention provides a galvannealed steel sheet having high corrosion resistance after painting. Description of Embodiments

The present invention will be described in detail below.

First, the chemical components will be described below.

### C: 0.05% to 0.30%

C is an element that can stabilize an austenite phase and is also an element that is required to increase the strength of the steel sheet. It is difficult to maintain the strength of the steel sheet at a C content of less than 0.05%. A C content of more than 0.30% results in poor weldability of the steel sheet. Thus, the C content ranges from 0.05% to 0.30%.

### Si: 1.0% to 3.0%

Si concentrates solid solution C of a ferrite phase in an austenite phase and increases the temper softening resistance of steel, thereby improving the formability of the steel sheet. This effect requires a Si content of 1.0% or more. Since Si is an oxidizable element, Si forms an oxide on the surface of the steel sheet during recrystallization annealing. Since Si significantly delays alloying in an alloying process after hot-dip coating, the alloying treatment must be performed at an increased alloying temperature. A Si content of more than 3.0% may result in no improvement in corrosion resistance after painting. Thus, the Si content ranges from 1.0% to 3.0%.

### Mn: 0.5% to 3.0%

Mn is an element that is useful in improving the quenching hardenability and increasing the strength of the steel sheet. These effects require a Mn content of 0.5% or more. A Mn content of more than 3.0% results in the segregation of Mn and poor formability. Thus, the Mn content ranges from 0.5% to 3.0%.

### Al: 0.01% to 3.00%

Al is an element that is added complementarily with Si. An Al content is 0.01% or more. However, an Al content of more than 3.00% results in poor weldability and an imbalance between strength and ductility. Thus, the Al content ranges from 0.01% to 3.00%.

### S: 0.001% to 0.010%

S is an inevitable element of steel and forms a platelike inclusion MnS, which impairs formability, after cold rolling. MnS is not formed at a S content of 0.010% or less. An excessive reduction in S content increases desulfurization costs in a steel making process. Thus, the S content ranges from 0.001% to 0.010%.

### P: 0.001% to 0.100%

P is an inevitable element of steel and an element that contributes to improved strength. On the other hand, P is an element that impairs weldability. A P content of more than 0.100% results in markedly poor weldability. An excessive reduction in P content increases manufacturing costs in a steel making process. Thus, the P content ranges from 0.001% to 0.100%.

The remainder are Fe and incidental impurities.

In the present invention, one or two or more of the following components may be contained if necessary.

### Cr: 0.1% to 1.0%

Cr is an element that is effective in improving the quenching hardenability of steel. Cr induces solid-solution hardening of a ferrite phase and reduces the difference in hardness between a martensite phase and the ferrite phase, thus effectively contributing to improved formability. Such an effect requires a Cr content of 0.1% or more. However, a Cr content of more than 1.0% results in saturation of the effect and instead a significant deterioration in surface quality. Thus, if necessary, the Cr content ranges from 0.1% to 1.0%.

### Mo: 0.1% to 1.0%

Mo is an element that is effective in improving the quenching hardenability of steel and is also an element that induces temper secondary hardening. These effects require a Mo content of 0.1% or more. However, a Mo content of more than 1.0% results in saturation of the effects and an increase in cost. Thus, if necessary, the Mo content ranges from 0.1% to 1.0%.

### Ti: 0.01% to 0.10%

Ti forms fine carbide or fine nitride with C or N in steel and is effective for the formation of a fine-grained structure and precipitation hardening after annealing. These effects require a Ti content of 0.01% or more. However, a Ti content of more than 0.10% results in saturation of the effects. Thus, if necessary, the Ti content ranges from 0.01% to 0.10%.

### Nb: 0.01% to 0.10%

Nb is an element that contributes to improved strength through solid solution strengthening or precipitation hardening.

This effect requires a Nb content of 0.01% or more. However, a Nb content of more than 0.10% results in low ductility of ferrite and poor processability. Thus, if necessary, the Nb content ranges from 0.01% to 0.10%.

### B: 0.0005% to 0.0050%

B is required to improve quenching hardenability, suppress the formation of ferrite during cooling after annealing, and produce a desired amount of martensite. These effects require a B content of 0.0005% or more. A B content of more than 0.0050% results in saturation of the effects. Thus, if necessary, the B content ranges from 0.0005% to 0.0050%.

Next, the galvannealed layer will be described below.

The galvannealed layer consists of Fe: 7% to 15% and Al: 0.02% to 0.30% and a remainder of Zn and incidental impurities.

The galvannealed layer is a coated layer mainly composed of an Fe-Zn alloy, which is formed by diffusion of Fe of the base material into a Zn coating through an alloying reaction. An Fe content of less than 7% results in a thick residual Zn layer that is not alloyed in the vicinity of the surface of the coated layer and impairs press formability. An Fe content of more than 15% results in poor adhesion of the coating because of the formation of a large amount of brittle alloy layer at the interface between the base material and the coated layer. Thus, the Fe content ranges from 7% to 15%.

Since a Zn bath contains Al so as to suppress alloying reactions in the bath, Al constitutes 0.02% to 0.30% of the coating. Furthermore, since various elements added to the steel sheet dissolve partly in the Zn bath, the coated layer unavoidably contains these elements.

The percentage of exposed Zn metal of the galvannealed layer surface is 20% or more.

A thin Zn and Al oxide layer derived from the bath components is formed on the surface layer of the galvannealed steel sheet. When the percentage of exposed Zn metal of the galvannealed layer surface is less than 20%, corrosion resistance after painting is deteriorated. Preferably, the percentage of exposed Zn metal of the galvannealed layer surface is 40% or more. In order to improve adhesion after painting, the exposed portion of Zn metal should not be localized in a portion of the coated layer surface. Thus, for example, the percentage of exposed Zn metal is 20% or more in any 500 µm x 500 µm area on the coated layer surface preferably.

The percentage of exposed Zn metal of the galvannealed layer surface can be determined from the intensity ratio between zinc oxide and zinc metal in an AES spectrum. More specifically; a zinc oxide spectrum at approximately 992 eV is separated from a zinc metal spectrum at approximately 996 eV on the basis of a standard sample spectrum to quantify the ratio of zinc metal to zinc oxide. Thus the percentage of zinc metal is obtained and taken as the percentage of exposed Zn metal.

The percentage of exposed Zn metal of the galvannealed layer surface can be increased to 20% or more, for example, by rolling the steel sheet with a dull roll having a surface roughness Ra of 2.0 µm or more at a rolling reduction of 0.3% or more and 0.8% or less and then rolling the resultant steel sheet with a bright roll having a surface roughness Ra of 0.1 µm or less at a rolling reduction of 0.4% or more and 1.0% or less in skin pass rolling. The rolling reduction with the bright roll must be greater than the rolling reduction with the dull roll. It is considered that rolling with the bright roll immediately after rolling with the dull roll can promote the removal of the surface oxide film and thereby the percentage of exposed Zn metal is increased.

Next, a method for manufacturing the galvannealed steel sheet will be described below.

A galvannealed steel sheet according to the present invention can be manufactured under any conditions, provided that the galvannealed steel sheet is mainly composed of the chemical components described above. For example, a slab containing the above composition is hot-rolled, is pickled if necessary, and is then cold-rolled.

The resulting steel sheet is then annealed, is coated, and is subjected to an alloying treatment in a continuous hot-dip galvannealing line. The annealing conditions in the hot-dip galvannealing line are not particularly limited and may be as described below, for example.

First, the steel sheet is heated to a temperature in the range of 400°C to 850°C in an atmosphere containing O₂: 0.01% to 20% by volume and H₂O: 1% to 50% by volume, is then heated to a temperature in the range of 750°C to 900°C in an atmosphere containing H₂: 1% to 50% by volume and having a dew point of 0°C or less, and is then cooled.

Heating in an atmosphere containing O₂ and H₂O is intended to form an Fe oxide film on the surface of the steel sheet. Annealing of a Si-rich steel sheet as in the present invention in a common reducing atmosphere may form Si oxide on the surface of the steel sheet, and Si oxide may repel zinc and thereby bare spots are formed. To avoid this, preferably, Fe oxide is formed on the surface of the steel sheet before annealing and is reduced during annealing to cover the surface of the steel sheet with reduced Fe after annealing.

When the O₂ content of the atmosphere is less than 0.01% by volume, Fe is not oxidized. Thus, the O₂ content is preferably 0.01% by volume or more. From an economic point of view, the O₂ content is preferably smaller than or equal to the atmospheric level, that is, 20% by volume or less. Preferably, the H₂O content is 1% by volume or more to promote oxidation. Preferably, the H₂O content is 50% by volume or less in terms of humidification cost. A steel sheet temperature of less than 400°C results in insufficient oxidation. A steel sheet temperature of more than 850°C results in excessive oxidation and the occurrence of flaws due to pickup with a roll in an annealing furnace. Thus, the steel sheet temperature preferably ranges from 400°C to 850°C.

Heating in an atmosphere containing H₂ is intended for recrystallization annealing of the steel sheet and reduction of Fe oxide formed on the surface of the steel sheet in the upstream process. A H₂ content of less than 1% by volume or a dew point of more than 0°C may result in insufficient reduction of Fe oxide and poor adhesion of the coating due to residual Fe oxide. A H₂ content of more than 50% by volume results in an increased cost. The lower limit of the dew point is not particularly limited and is preferably - 60°C or more because a dew point of less than -60°C is industrially difficult to achieve.

A steel sheet temperature of less than 750°C may result in insufficient relief of strain resulting from cold rolling, the presence of residual unrecovered ferrite, and poor processability. A steel sheet temperature of more than 900°C requires a high heating cost.

After annealing, the steel sheet is cooled and is immersed in a hot-dip galvanizing bath at a bath temperature in the range of 440°C to 550°C at an Al concentration in the range of 0.10% to 0.20% to perform hot-dip galvanizing. The galvanized steel sheet is then subjected to an alloying treatment at a temperature in the range of 480°C to 580°C.

A zinc bath temperature of less than 440°C may result in the solidification of Zn in a portion of the coating bath having large temperature variations. A zinc bath temperature of more than 550°C may result in rapid evaporation and cause operational problems, such as high operation costs and deposition of vaporized Zn onto an inside of a furnace. This also tends to result in over-alloying because alloying proceeds during hot-dip galvanizing.

When the Al concentration of the bath is less than 0.10%, a large amount of Γ phase is generated and may cause a poor powdering property. When the Al concentration of the bath is more than 0.20%, Fe-Zn alloying sometimes does not proceed.

An alloying treatment temperature of less than 480°C results in slow alloying. An alloying treatment temperature of more than 580°C may result in excessive formation of a hard and brittle Zn-Fe alloy layer at the interface with the base steel due to over-alloying and may cause poor adhesion of the coating. This may also result in the decomposition of a retained austenite phase and may cause a poor strength-ductility balance.

The amount of coating is not particularly limited and is preferably 10 g/m² or more (per side) in consideration of corrosion resistance and controllability of the amount of coating. A large amount of coating results in poor adhesion. Thus, the amount of coating is preferably 120 g/m² or less (per side).

When the alloying treatment temperature is more than 520°C, an inert gas is preferably blown over the surface of coating at a temperature of 500°C or more. An alloying treatment at high temperatures may result in the formation of a thick Zn oxide film and a low percentage of exposed Zn metal. To avoid this, an inert gas is blown over the surface of coating to reduce the oxygen supply to the surface of coating and retard the growth of the Zn oxide film. Since temperature of less than 500°C may result in insufficient formation of the Zn oxide film, reduction of oxygen supply may result in the evaporation of Zn because of its low vapor pressure. Thus, an inert gas is preferably blown over the surface of coating at a temperature of 500°C or more.

### EXAMPLES

The present invention will be more specifically described in the following examples.

A slab having a steel composition shown in Table 1 was heated in a heating furnace at 1260°C for 60 minutes, was subsequently hot-rolled to 2.8 mm, and was coiled at 540°C. Mill scale was then removed by pickling, and the steel sheet was cold-rolled to 1.6 mm. The steel sheet was then heated to 700°C in a furnace in an oxidizing atmosphere having an O₂ content in the range of 0.01% to 5.0% by volume, was then heated to and maintained at 850°C in an reducing atmosphere having a H₂ content in the range of 5% to 15% by volume and a dew point of less than 0°C, and was cooled to 480°C. The atmosphere in the furnace could be altered, and the gas flow rate could be maintained constant during heat treatment.

Subsequently, the steel sheet was subjected to hot-dip galvanizing in a Zn bath containing Al at 460°C to produce a galvanized steel sheet. The Al concentration of the bath was 0.14%. The amount of coating was adjusted to be 40 g/m² per side using gas wiping. Subsequently, the steel sheet was subjected to an alloying treatment at a temperature in the range of 480°C to 580°C to produce a galvannealed steel sheet with a galvannealed layer having an Fe content in the range of 9% to 13%. In the alloying treatment, when the alloying temperature was more than 520°C, N₂ or Ar gas was blown over the galvanized layer surface in a steel sheet temperature range of 500°C or more to retard the growth of a Zn oxide layer. The galvannealed steel sheet was then subjected to skin pass rolling under conditions shown in Table 2.

The galvannealed steel sheet obtained above was subjected to measurement of the percentage of exposed Zn metal and evaluation of corrosion resistance after painting.

The surface of the obtained steel sheet was analyzed by XPS. The percentage of exposed Zn metal was determined by calculating the ratio of Zn metal to oxide Zn on the surface of the steel sheet from the XPS profile.

The galvannealed steel sheet was subjected to a chemical conversion treatment and electrodeposition coating. The sample surface was then slit for SST (Salt water spray test). The blister width along the slit after SST was compared with the blister width of reference mild steel to evaluate corrosion resistance. Double circles and circles indicate acceptable levels.
Double circle: substantially the same blister width as mild steel
Circle: less than or equal to 1.5 times the blister width of mild steel
Cross: more than 1.5 times the blister width of mild steel

Table 2 shows the results together with manufacturing conditions.

**[Table 1]**

| | | | | | | | | | | | (mass%) |
|---|---|---|---|---|---|---|---|---|---|---|---|
| Symbol for steel sheet | C | Si | Mn | Al | S | P | Cr | Mo | Ti | Nb | B |
| A | 0.08 | 1.5 | 1.4 | 0.03 | 0.005 | 0.012 | - | - | - | - | - |
| B | 0.08 | 1.5 | 1.4 | 0.03 | 0.005 | 0.010 | 0.2 | - | - | - | - |
| C | 0.12 | 1.4 | 1.9 | 0.03 | 0.005 | 0.013 | - | - | - | - | - |
| D | 0.12 | 1.4 | 1.9 | 0.03 | 0.005 | 0.013 | - | 0.2 | - | - | 0.0010 |
| E | 0.08 | 1.0 | 2.1 | 0.03 | 0.005 | 0.011 | - | - | - | - | - |
| F | 0.08 | 1.0 | 2.1 | 0.03 | 0.005 | 0.010 | 0.1 | - | - | - | - |
| G | 0.08 | 1.0 | 2.1 | 0.03 | 0.005 | 0.015 | - | - | 0.05 | 0.03 | - |
| H | 0.09 | 2.3 | 1.4 | 0.02 | 0.003 | 0.020 | - | - | - | - | - |
| I | 0.12 | 3.5 | 1.5 | 0.02 | 0.005 | 0.018 | - | - | - | - | - |

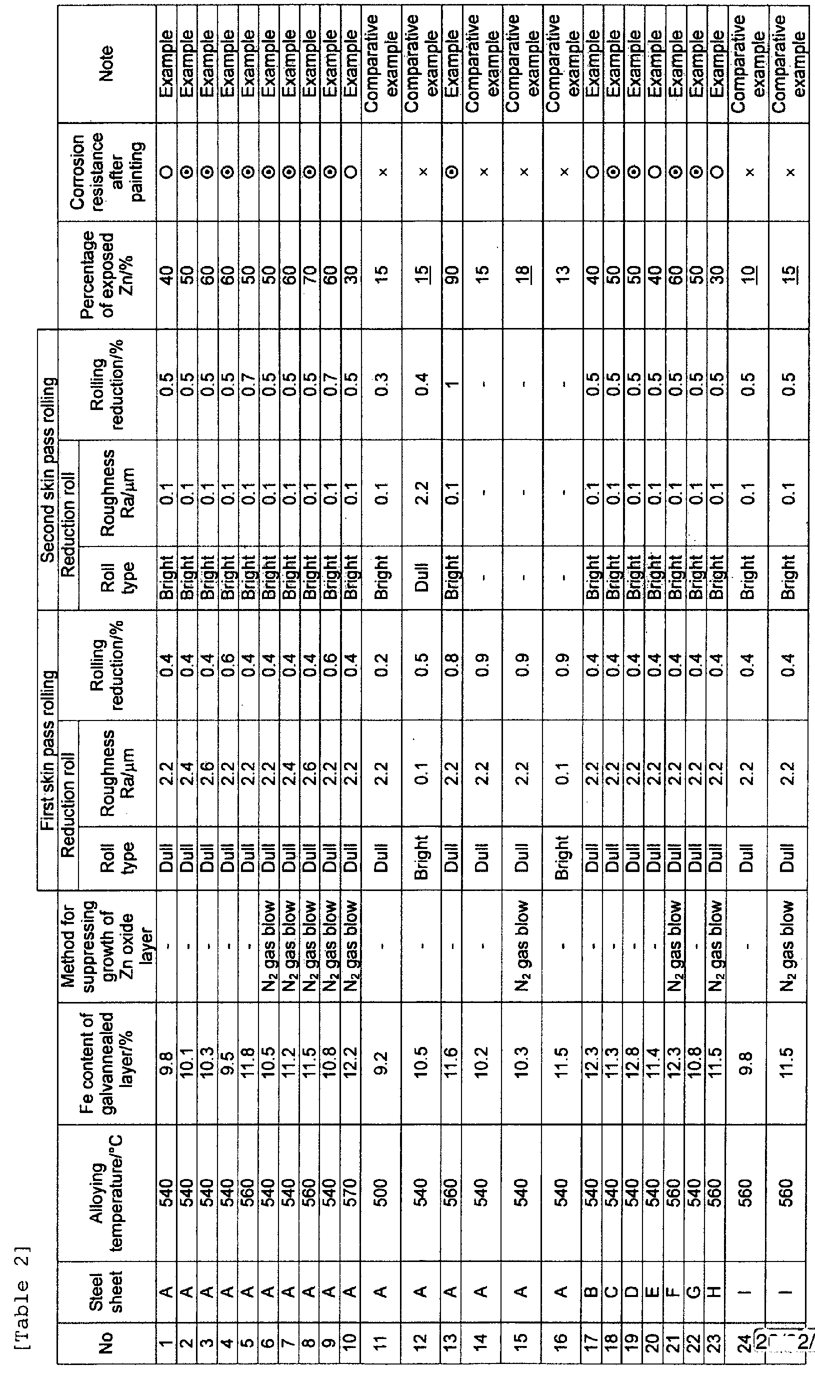

Table 2 shows that the galvannealed steel sheets according to the examples of the present invention had high corrosion resistance after painting irrespective of the inclusion of Si. In contrast, the galvannealed steel sheets according to the comparative examples had low corrosion resistance after painting.

### Industrial Applicability

A galvannealed steel sheet according to the present invention has high corrosion resistance after painting and is expected to be widely used in the automotive field and other fields.

## Claims

1. A galvannealed steel sheet having high corrosion resistance after painting, consisting of, on a mass percent basis, C: 0.05% to 0.30%, Si: 1.0% to 3.0%, Mn: 0.5% to 3.0%, Al: 0.01% to 3.00.%, S: 0.001% to 0.010%, and P: 0.001% to 0.100% as chemical components, optionally further consisting of at least one element selected from Cr: 0.1% to 1.0%, Mo: 0.1% to 1.0%, Ti: 0.01% to 0.10%, Nb: 0.01% to 0.10%, and B: 0.0005% to 0.0050% on a mass percent basis, the remainder being Fe and incidental impurities, wherein the steel sheet includes a galvannealed layer on the surface thereof, the galvannealed layer consisting of Fe: 7% to 15% and Al: 0.02% to 0.30% and a remainder being Zn and incidental impurities, the percentage of exposed Zn metal of the galvannealed layer surface being 20% or more.

## Patentansprüche

1. Feuerverzinktes und thermisch nachbehandeltes Stahlblech mit hoher Korrosionsbeständigkeit nach dem Anstreichen, das, auf einer Massenprozent-Basis, aus C: 0,05 % bis 0,30 %, Si: 1,0 % bis 3,0 %, Mn: 0,5 % bis 3,0 %, Al: 0,01 % bis 3,00 %, S: 0,001 % bis 0,010 %, und P: 0,001 % bis 0,100 % als chemische Bestandteile besteht, gegebenenfalls außerdem aus wenigstens einem Element, ausgewählt aus Cr: 0,1 % bis 1,0 %, Mo: 0,1 % bis 1,0%, Ti: 0,01 % bis 0,10 %, Nb: 0,01 % bis 0,10%, und B: 0,0005 % bis 0,0050 % auf einer Massenprozent-Basis, besteht, wobei der Rest Fe und zufällige Verunreinigungen sind, wobei das Stahlblech eine feuerverzinkte und thermisch nachbehandelte Schicht auf seiner Oberfläche einschließt, wobei die feuerverzinkte und thermisch nachbehandelte Schicht aus Fe: 7% bis 15 % und Al: 0,02 % bis 0,30 % besteht, wobei der Rest Zn und zufällige Verunreinigungen sind, wobei der Prozentsatz von freiliegendem Zn-Metall der Oberfläche der feuerverzinkten und thermisch nachbehandelten Schicht 20 % oder mehr beträgt.

## Revendications

1. Tôle d'acier recuite après galvanisation présentant une résistance élevée à la corrosion après peinture, constituée, sur une base de pourcentage en masse, de C : de 0,05 % à 0,30 %, Si : de 1,0 % à 3,0 %, Mn : de 0,5 % à 3,0 %, Al : de 0,01 % à 3,00 %, S : de 0,001 % à 0,010 %, et P : de 0,001 % à 0,100 % comme composants chimiques, constitués éventuellement de manière supplémentaire d'au moins un élément sélectionné parmi Cr : de 0,1 % à 1,0 %, Mo : de 0,1 % à 1,0 %, Ti : de 0,01 % à 0,10 %, Nb : de 0,01 % à 0,10 %, et B : de 0,0005 % à 0,0050 % sur une base de pourcentage en masse, le reste étant Fe et des impuretés accidentelles, la tôle d'acier comprenant une couche recuite après galvanisation sur sa surface, la couche recuite après galvanisation étant constituée de Fe : de 7 % à 15 % et Al : de 0,02 % à 0,30 % et le reste étant Zn et des impuretés accidentelles, le pourcentage de métal Zn exposé de la surface de couche recuite après galvanisation étant de 20 % ou plus.
